# EUROPÄISCHE PATENTSCHRIFT

(11) **EP 1 480 843 B1**
(45) Veröffentlichungstag und Bekanntmachung des Hinweises auf die Patenterteilung: **24.01.2007**
(21) Anmeldenummer: 03702192.0
(22) Anmeldetag: 27.01.2003
(51) Int. Cl.: B60C 27/10

(54) **GLEITSCHUTZKETTE**
ANTI-SKID CHAIN
CHAINE ANTIDERAPANTE

(30) Priorität: 04.03.2002 AT 3342002
(43) Veröffentlichungstag der Anmeldung: 01.12.2004
(73) Patentinhaber: PEWAG AUSTRIA GmbH, 8010 Graz (AT)
(72) Erfinder: PENGG, Ägyd, A-9220 Velden (AT)
(74) Vertreter: Patentanwaltskanzlei Matschnig
(86) Internationale Anmeldenummer: PCT/AT2003/000026
(87) Internationale Veröffentlichungsnummer: WO 2003/074301

(56) Entgegenhaltungen:
- DE-C- 3 347 989
- US-A- 1 589 852

## Beschreibung

Die Erfindung betrifft eine Gleitschutzkette mit einem Laufnetz und einer mit diesem verbundenen Haltevorrichtung, die in montierten Zustand im wesentlichen zu einem an einer inneren Seitenflanke eines Reifens anliegenden Ring geschlossen ist, wobei an beiden Enden der Haltevorrichtung je ein Verschlussteil angeordnet ist, die beiden Verschlussteile miteinander verbindbar sind, und das Laufnetz an der Außenseite des Reifens von zumindest einer Spann/Halteeinrichtung gespannt ist, die beiden Verschlussteile je eine plattenförmige Basis aufweisen und im wesentlichen entlang einer zu den beiden plattenförmigen Basen parallelen Ebene in eine Schließposition bewegbar sind, in welcher sie lösbar ineinander greifen, wobei die Basis eines ersten der beiden Verschlussteile eine Haltenase aufweist.

Das Anlegen von Schneeketten wird von einer überwiegenden Anzahl von Autofahrern als unangenehm und schwierig empfunden. Aus diesem Grund wird oftmals auf das Anlegen von Gleitschutzketten auf durch Glätte gefährdeten Streckenabschnitten verzichtet, womit ein großes Sicherheitsrisiko verbunden ist. Um dieses Sicherheitsrisiko zu vermindern ist es notwendig, dass Gleitschutzketten leicht zu montieren und ebenso leicht wieder zu demontieren sind.

In der Praxis hat sich herausgestellt, dass Gleitschutzketten mit einer zu einem Ring verbindbaren Haltevorrichtung für ein Laufnetz der Forderung nach einer schnellen und einfachen Montage am ehesten gerecht werden. Üblicherweise liegt hierbei die Haltevorrichtung an der Innenflanke eines Reifens an.

Eine Gleitschutzkette der eingangs genannten Art ist beispielsweise aus der DE 199 47 855 A1 bekannt geworden. Die bekannte Gleitschutzkette weist eine zu einem Ring verbindbare Haltevorrichtung auf, beispielsweise einen federelastischen Montagebügel oder ein Stahlseil. Die beiden Enden der Haltevorrichtung weisen je ein Verschlussteil auf, mit welchen die Haltevorrichtung zu einem Ring geschlossen werden kann. Ein erstes Verschlussteil weist einen Haken und das zweite Verschlussteil einen mit den Haken in Eingriff bringbare Öffnung auf. Das zweite Verschlussteil ist aus einem Hohlzylinder hergestellt und weist einen Einhängeabschnitt für das Hakenteil und einen rohrförmigen Befestigungsabschnitt auf, mit dem es an dem zugeordneten Ende der Haltevorrichtung befestigt ist. Der Einhängeabschnitt ist von einer aufgeklappten Zylinderwand gebildet, die in eine Öffnung zum Koppeln mit dem Hakenteil eingebracht ist.

Die DE 36 43 652 C1 offenbart ebenfalls eine Gleitschutzkette der oben genannten Art. Diese Kette weist ebenfalls eine ringförmige federelastische Haltevorrichtung auf, die mittels zwei Verschlussteilen geschlossen bzw. geöffnet werden kann. Eine Gleitschutzketten der eingangs genannten Art ist beispielsweise auch in der DE 69216 237 T2 beschrieben.

Die DE 39 06 486 A1 beschreibt eine Gleitschutzkette mit einer inneren und einer äußeren Seitenhalterung, die in einem montierten Zustand je an einer Seitenflanke eines Fahrzeugreifens anliegen. Die beiden Seitenhalterungen sind über ein Laufnetz miteinander verbunden. Weiters können die beiden Enden einer Seitenhalterung mittels eines, zwei Verschlussteile mit je einer plattenförmigen Basis aufweisenden Verschlusses miteinander verbunden werden. An einem der beiden Verschlussteile ist eine von der plattenförmigen Basis wegragende Haltelasche vorgesehen, die mit einer korrespondierenden Öffnung des zweiten Verschlussteils in Eingriff gebracht werden kann.

Die DE 33 47 989 bezieht sich auf einen Verschluss für eine gattungsgemäße Gleitschutzkette mit zwei Verschlussteilen, von denen je einer an einem Ende einer an einer Radflanke anliegenden Innenseitenhalterung angeordnet ist. Die beiden Verschlussstücke weisen je eine hakenförmige Umbiegung und eine Rastkante für die Umbiegung des anderen Verschlussstückes auf.

In der US 4,280,545 A ist eine Antigleitschutzvorrichtung dargestellt mit zwei seitlichen, an einander gegenüberliegenden Radflanken anliegenden Seitensträngen aus Drahtseilen, zwischen welchen querverlaufende Kabel angeordnet sind. Die Enden eines Drahtseiles sind mittels eines aus zwei Teilen bestehenden Verschlusses miteinander verbindbar, wobei ein erster Verschlussteil eine Haltelasche und ein zweiter Verschlussteil eine mit der Haltelasche in Eingriff bringbare Öffnung bzw. Rastkante aufweist.

Die WO 90/07434 A zeigt eine Vorrichtung zur Rutschsicherung von Fahrradreifen. Die bekannte Vorrichtung weist zwei an je einer Seitenflanke anliegende Spannseile auf, zwischen welchen gekrümmte aus verformbarem Bandmaterial hergestellte Querstege verlaufen. Die Enden eines Spannseiles sind über eine Gewinde-Muffenverbindung miteinander verbindbar, wobei die Spannseile weiters mittels der je zugeordneten Gewinde-Muffenverbindung gespannt werden können.

Nachteilig an den bekannten Gleitschutzketten ist vor allem, dass die Verschlussteile, welche zum Schließen und Öffnen der Haltevorrichtung dienen, schwierig zu handhaben sind. Darüber hinaus ist die Demontage bei den bekannten Vorrichtungen schwierig, da zum Lösen der Verschlussteile hinter den Fahrzeugreifen bzw. in den Radkasten gegriffen werden muss.

Es ist daher eine Aufgabe der Erfindung, einen Weg zu schaffen, der eine einfache und schnelle Montage und Demontage der Gleitschutzkette ermöglicht.

Diese Aufgabe wird mit einer Gleitschutzkette der eingangs genannten Art erfindungsgemäß dadurch gelöst, dass von der Basis des zweiten Verschlussteils abstehende, einander gegenüberliegende Stege zum Führen der Basis des ersten Verschlussteils in die Schließposition vorgesehen sind, wobei einer der Stege in der Schließposition zumindest abschnittsweise von der Haltenase umfasst ist, sowie ein der Haltenase gegenüberliegender Rücken der Basis des ersten Verschlussteils von dem anderen Steg abgestützt ist, und die Verschlussteile in montiertem Zustand durch über das an den beiden Verschlussteilen angreifende Laufnetz eingeleitete Zugkräfte in der Schließposition gehalten sind.

Es ist ein Verdienst der Erfindung, ein weitgehend selbsttätiges Lösen der Gleitschutzkette von einem Reifen bei der Demontage zu ermöglichen. Da die beiden Verschlussteile durch die über das Laufnetz eingeleiteten Zugkräfte in der Schließposition gehalten werden, lassen sich diese beiden Teile bei Fehlen der haltenden Zugkräfte ohne bzw. mit sehr geringem Aufwand voneinander lösen. Durch Öffnen von das Laufnetz spannenden Spannschlössern, können die Verschlussteile entlastet und beispielsweise und durch kurzes Rütteln an der Laufkette voneinander gelöst werden, wodurch sich die Haltevorrichtung lösen und das Laufnetz vom Reifen gezogen werden kann.

In einer bevorzugten Ausführungsform der Erfindung weist zumindest einer der Stege eine Abwinkelung zur plattenförmigen Basis des zweiten Verschlussteils auf.

Eine besonders günstige Variante zur Einleitung der Zugkräfte in die Verschlussteile sieht vor, dass die beiden Verschlussteile an ihren einander abgewandten Endbereichen mit je einem Kettenstrang des Laufnetzes verbunden sind.

Eine besonders gute Fixierung der Verschlussteile in der Schließposition lässt sich dadurch verwirklichen, dass die beiden Kettenstränge in montiertem Zustand im Bereich der inneren Seitenflanken anliegen und in Richtung der Lauffläche des Reifens von einer normal zur Seitenflanke verlaufenden Mittelebene der beiden Verschlussteile fortweisen.

Ein Selbstlösen der beiden Verschlussteile voneinander bei der Demontage der Gleitschutzkette wird dadurch erleichtert, dass der erste Verschlussteil in einem von dem Rücken in die Haltenase übergehenden Bereich der Basis einen Krümmungsradius aufweist der größer als der Normalabstand zwischen den beiden Stegen des zweiten Verschlussteils ist.

Die Befestigung der Kettenstränge an den Verschlusselementen lässt sich dadurch vereinfachen, dass die beiden Endbereiche von der jeweiligen Basis weggebogen sind und eine Bohrung zur Aufnahme eines mit dem jeweiligen Kettenstrang verbundenen Verbindungselements aufweist.

Die Montage der Gleitschutzkette kann dadurch erleichtert werden, dass die Verschlussteile um die Längsachse der Haltevorrichtung drehbar gelagert sind.

Eine Variante der Erfindung sieht vor, dass an jedem Verschlussteil ein einem Endabschnitt der Haltevorrichtung zugeordneter Endbereich um den jeweiligen Endabschnitt der Haltevorrichtung gebogen ist.

Vorteilhafterweise ist jedes der Verschlussteile einstückig gefertigt.

Um eine optimale Montage zu gewährleisten, weist das erste Verschlusselement einen Anschlag für das zweite Verschlusselement auf, welcher die Bewegung entlang der Längserstreckung der beiden Verschlusselemente in die Schließposition begrenzt.

Die Erfindung samt einigen nicht einschränkenden Ausführungsbeispielen, sind in der Zeichnung dargestellt. In dieser zeigen schematisch:
- Fig.1a: die Außenseite eines Reifen eines Kraftfahrzeuges mit verschiedenen Positionen zweier Verschlussteile einer erfindungsgemäßen Gleitschutzkette während der Montage in perspektivischer Ansicht;
- Fig.1b: die Innenseite des Reifens aus Fig. 1a mit den beiden Verschlussteilen in der Schließposition und in verschiedenen Positionen während des Öffnungsvorgangs in perspektivischer Ansicht;
- Fig. 2a: eine Seitenansicht der Innenseite des Reifens aus Fig. 1a mit einer erfindungsgemäßen Gleitschutzkette während eines Montage/Demontagevorgangs;
- Fig. 2b: eine Seitenansicht der Außenseite des Reifens aus Fig. 2a mit einer erfindungsgemäßen Gleitschutzkette während eines Montage/Demontagevorgangs;
- Fig.3a: eine Seitenansicht der Außenseite des Reifens aus Fig. 2a mit einer erfindungsgemäßen Gleitschutzkette in einem montierten Zustand;
- Fig. 3b: eine Seitenansicht der Innenseite des Reifens aus Fig. 3a mit einer erfindungsgemäßen Gleitschutzkette in einem montierten Zustand;
- Fig. 3c: den Bereich IIIc aus Fig. 3b im näheren Detail;
- Fig. 4: einen Schnitt entlang der Linie IV - IV in Fig. 6c;
- Fig. 5: einen Schnitt entlang V - V in Fig. 6c;
- Fig. 6a - 6f: die beiden Verschlussteile aus Fig. 4c in verschiedenen Montage/Demontagezuständen.
- Fig. 7: einen Schnitt entlang der Linie VII - VII in Fig. 6a;
- Fig. 8: eine Seitenansicht auf ein erstes Verschlussteil, welches eine Haltenase aufweist und
- Fig. 9: eine Draufsicht auf das Verschlussteil aus Fig. 8.

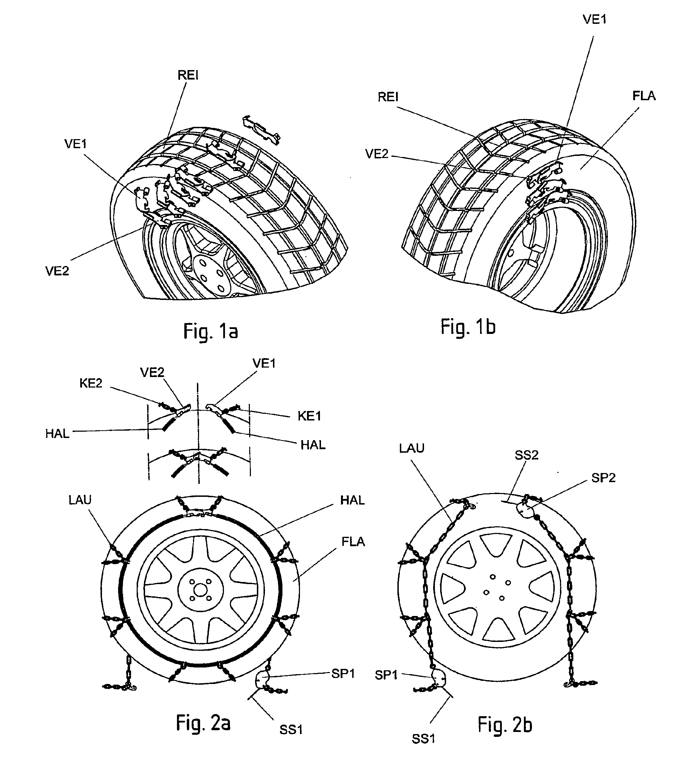

Gemäß den Fig. 1 - 3a weist eine erfindungsgemäße Gleitschutzkette eine Haltevorrichtung HAL mit je einem Verschlussteil VE1, VE2 an ihren freien Enden auf. Durch Verbinden der beiden Verschlussteile VE1, VE2 kann die Haltevorrichtung HAL zu einem Ring geschlossen werden. In einem montierten Zustand liegt die Haltevorrichtung HAL an einer inneren, d. h. einem Fahrzeug zugewandten, Flanke FLA eines Reifens REI an. Die Haltevorrichtung HAL kann beispielsweise ein Drahtseil, ein federelastischer Bügel etc. sein. An der Haltevorrichtung HAL ist ein aus einer Verbindung von einzelnen Kettensträngen bzw. -gliedern gebildetes Laufnetz LAU der Gleitschutzkette befestigt.

Zum Spannen des Laufnetzes LAU an der Reifenaußenseite können ein oder mehrere Spann/Haltevorrichtungen, beispielsweise Spannschlösser SP1, SP2 vorgesehen sein. In der hier dargestellten Ausführungsform sind beispielsweise zwei einander gegenüberliegende Spannschlösser SP1, SP2 vorgesehen. Die Spannschlösser SP1, SP2 weisen je einen Spannstrang SS1, SS2 auf. Ein Spannstrang SS1, SS2 kann an seinem außerhalb eines Spannschlosses SP1, SP2 angeordneten Ende mit einem Haken HAK versehen sein, welcher an dem Laufnetz LAU einhängbar ist. Eine andere Variante besteht darin, dass der Spannstrang SS1, SS2 anstelle des Hakens HAK eine Aufnahmeeinrichtung für einen Haken aufweist und der Haken an einem Kettenstrang der Laufnetzes LAU angeordnet ist.

Nach Verbinden des außerhalb des Spannschlosses SP1, SP2 angeordneten Endes des Spanstranges mit dem Laufnetz kann durch Betätigen des Spannschlosses SP1, SP2 der eingehängte Spannstrang SS1, SS2 teilweise in das Spannschloss SP1, SP2 gezogen werden, wodurch sich das Laufnetz spannen lässt. Eine mögliche Ausführungsform für die Spannschlösser SP1, SP2 ist beispielsweise in der AT 408 635 B der Anmelderin beschrieben.

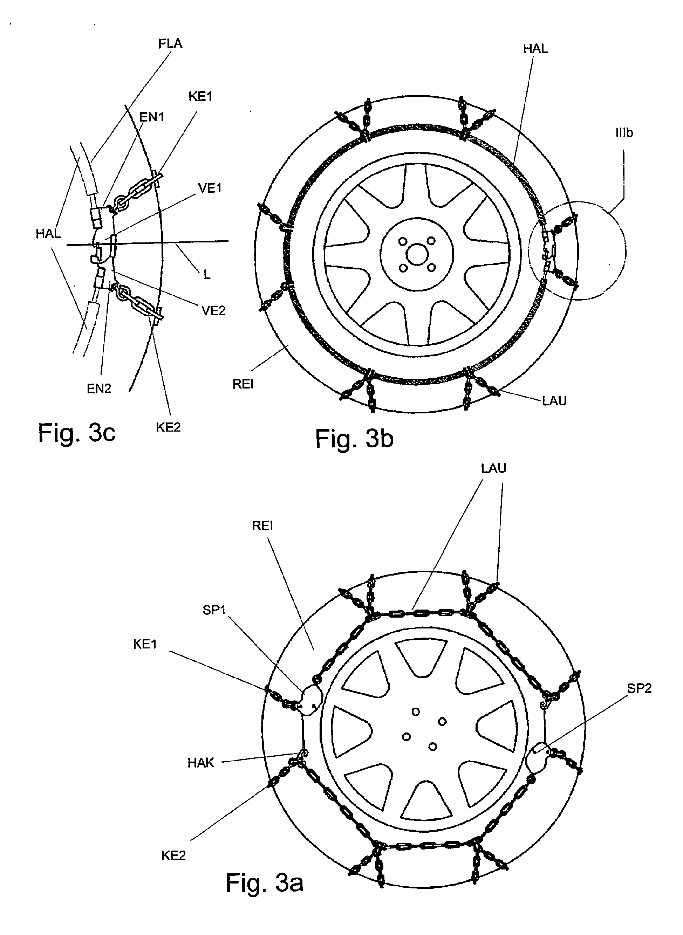

Gemäß Fig. 3a ist eines dieser Spannschlösser SP1 mit einem Kettenstrang KE1 des Laufnetzes LAU fix verbunden und mit einem zweiten Kettensrang KE2 zur Montage mit dem Haken HAK bzw. über den Spannstrang SS1 verbindbar.

Nach Fig. 3b und 3c ist jeder der Kettenstränge KE1, KE2 ist mit einem Verschlussteil VE1, VE2 der Haltevorrichtung HAL verbunden. Die Kettenstränge KE1, KE2 sind hierbei an Endbereichen EN1, EN2 der Verbindungsteile VE1, VE2 so angebracht, dass sie in einem gespannten Zustand die beiden Verschlussteile VE1, VE2 gegeneinander fixieren.

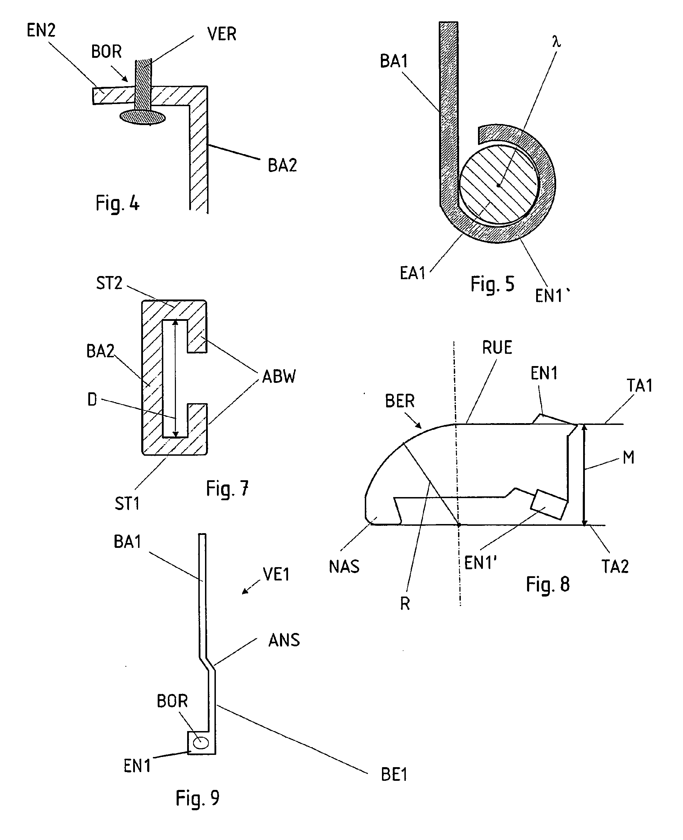

Nach Fig. 4 können die beiden Endbereiche EN1, EN2 der Verschlussteile VE1, VE2 von der jeweiligen Basis BA1, BA2 weggebogen sein und eine Bohrung BOR zur Aufnahme eines mit dem jeweiligen Kettenstrang KE1, KE2 verbundenen Verbindungselements VER, beispielsweise eines Hakens aufweisen.

Weiters können die Verschlussteile VE1, VE2 gemäß Fig. 5 um die Längsachse λ der Haltevorrichtung HAL drehbar gelagert sein, so kann beispielsweise an jedem Verschlussteil VE1, VE2 ein einem Endabschnitt der Haltevorrichtung zugeordneten Endbereich EN1' um den jeweiligen Endabschnitt EA1 der Haltevorrichtung HAL gebogen ist. Zweckmäßigerweise ist jedes der Verschlussteile VE1, VE2 einstückig gefertigt.

Die beiden Kettenstränge KE1, KE2 liegen in montiertem Zustand im Bereich der inneren Seitenflanken FLA an und weisen von einer normal zur Seitenflanke FLA verlaufenden Mittelebene L fort.

Durch diese Anordnung der Kettenstränge KE1, KE2 werden die Verschlussteile VE1, VE2 durch von dem Laufnetz LAU eingeleitete Zugkräfte in der Schließposition SPO gehalten.

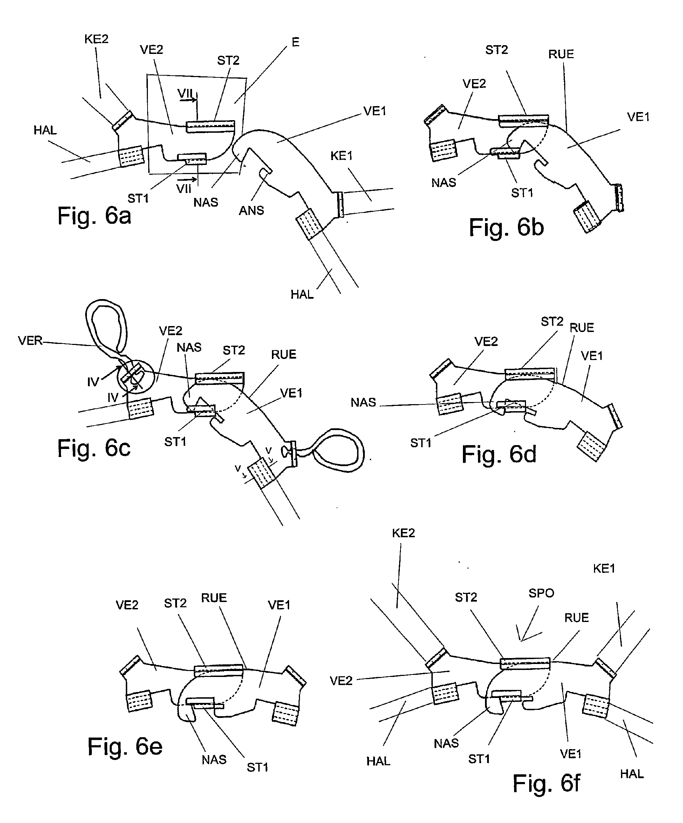

Gemäß Fig. 6a - 6f weisen die beiden Verschlussteile VE1, VE2 je eine plattenförmige Basis BA1, BA2 auf. Unter einem plattenförmig Körper wird in diesem Dokument ein Körper verstanden, der von zwei zueinander parallelen Ebenen begrenzt ist, wobei der Abstand zwischen den beiden Ebenen vergleichsweise gering zur Längserstreckung des Körpers ist. Der Abstand zwischen den beiden Ebenen ist jedoch ausreichend zur Erhaltung der Biegesteifigkeit der Verschlussteile VE1, VE2. Die beiden Verschlusselemente VE1, VE2 sind im wesentlichen entlang einer zu den beiden plattenförmigen Basen BAS parallelen Ebene E in eine Schließposition SPO bewegbar, in welcher sie lösbar ineinander greifen. Aufgrund der flachen Ausführungsform der Verschlussteile VE1, VE2 liegen diese in einem montierten Zustand im wesentlichen flach an der inneren Seitenflanke des Reifens REI an.

Die Basis BA1 des ersten der beiden Verschlussteile VE1 geht in eine flache Haltenase NAS über und ist von zwei einander gegenüberliegenden von der Basis BA2 des zweiten Verschlussteils VE2 abstehenden Stegen ST1, ST2 in die Schließposition SPO geführt. Vorzugsweise weist mindestens einer der Stege ST1, ST2 eine Abwinkelung ABW zu der zugehörigen Basis BA1, BA2 auf (Fig. 7). Der Steg ST1, welcher die Haltenase NAS in die Schließposition SPO führt, ist in der Schließposition SPO abschnittsweise von der Haltenase NAS umfasst, wodurch ein Lösen der beiden Verschlussteile in Längsrichtung verhindert werden kann.

Der erste Verschlussteil VE1 weist in einem in der Haltenase NAS übergehenden Bereich BER des Rückens RUE der Basis BA1 einen Krümmungsradius auf der größer als der Normalabstand D zwischen den beiden Stegen ST1, ST2 des zweiten Verschlussteils VE2 ist.

In der Ausführungsform der Erfindung nach Fig. 8 ist der Bereich BER als Teil eines Zylindermantels ausgebildet. Der Krümmungsradius Radius R entspricht hierbei im wesentlichen dem Abstand M zwischen einer parallel zu einer Tangente TA1 an den Rücken RUE des ersten Verschlussteils VE1 verlaufenden Tangente TA2 an das Ende der Haltenase HAL. Dadurch kann die Haltenase NAS durch eine Drehung um eine Achse normal zur Ebene E in bzw. aus der Schließposition gedreht werden (Fig. 4c, 4d). Darüber hinaus ist ein der Haltenase NAS gegenüberliegender Rücken RUE der Basis BA1 des ersten Verschlussteils VE1 von dem anderen Steg ST2 in der Schließposition SPO abgestützt (Fig. 6e, 6f).

Durch einen Anschlag ANS, beispielsweise in Form einer zusätzlichen Haltenase, kann der erste Verschlussteil VE1 zusätzlich gegen ein Verrutschen entlang der Längserstreckung des zweiten Verschlussteils VE2 gesichert werden (Fig. 6a-6f). Darüber hinaus begrenzt der Anschlag ANS die Bewegung entlang der Längserstreckung der beiden Verschlussteile während des Schließvorganges, wodurch eine korrekte Montage der Gleitschutzkette gewährleistet werden kann.

Eine andere Variante der Erfindung gemäß Fig. 9 sieht vor, dass der erste Verschlussteil VE1 in montiertem Zustand in einem aus dem zweiten Verschlussteil VE2 herausragenden Bereich BE1 im wesentlichen um die Dicke der plattenförmigen Basis BA2 in Richtung der Flanke FLA des Reifens versetzt ist. Der Anschlag ANS wird hierbei durch den Übergang zwischen den zueinander versetzten Bereichen des ersten Verschlussteils gebildet. Im Gegensatz zu der oben genannten Variante wirkt der Ansatz ANS hierbei nicht mit dem Steg ST1 sondern mit dem vorderen Ende des zweiten Verschlussteils VE2 zusammen. Durch die soeben genannte Ausführungsform lässt sich darüber hinaus gewährleisten, dass beide Verschlussteile VE1, VE2 an der Seitenflanke FLA des Reifens REI anliegen.

Durch die von dem Spannschloss SP1 erzeugten Zugkräfte werden der Rücken RUE des ersten Verschlussteils VE1 und der Steg ST2 des zweiten Verschlussteils VE2 in der Schließposition SPO gegeneinander gepresst, wodurch ein Lösen der Verschlussteile VE1, VE2 voneinander verhindert wird. Fallen die Zugkräfte weg, so wirken nur mehr von der federelastischen Haltevorrichtung HAL hervorgerufenen Kräfte auf die beiden Verschlussteile VE1, VE2, wodurch sich die Verschlussteile VE1, VE2 selbsttätig voneinander lösen können.

Durch die erfindungsgemäße Ausführungsform wird ein Selbstlösen der beiden Verschlussteile VE1, VE2 voneinander bei Wegfall der fixierenden Zugkräfte ermöglicht, weshalb sich der Aufwand bei der Demontage der Gleitschutzkette auf ein Minimum reduzieren lässt.

## Patentansprüche

1. Gleitschutzkette mit einem Laufnetz (LAU) und einer mit diesem verbundenen Haltevorrichtung (HAL), die in montierten Zustand im wesentlichen zu einem an einer inneren Seitenflanke (FLA) eines Reifens anliegenden Ring geschlossen ist, wobei an beiden Enden der Haltevorrichtung (HAL) je ein Verschlussteil (VE1, VE2) angeordnet ist, die beiden Verschlussteile (VE1, VE2) miteinander verbindbar sind, und das Laufnetz (LAU) an der Außenseite des Reifens von zumindest einer Spann/Halteeinrichtung gespannt ist, die beiden Verschlussteile (VE1, VE2) je eine plattenförmige Basis (BA1, BA2) aufweisen und im wesentlichen entlang einer zu den beiden plattenförmigen Basen (BA1, BA2) parallelen Ebene (E) in eine Schließposition (SPO) bewegbar sind, in welcher sie lösbar ineinander greifen, wobei die Basis (BA1) eines ersten der beiden Verschlussteile (VE1) eine Haltenase (NAS) aufweist, **dadurch gekennzeichnet, dass** von der Basis (BA2) des zweiten Verschlussteils (VE2) abstehende, einander gegenüberliegende Stege (ST1, ST2) zum Führen der Basis (BA1) des ersten Verschlussteils (VE1) in die Schließposition (SPO) vorgesehen sind, wobei einer der Stege (ST1) in der Schließposition (SPO) zumindest abschnittsweise von der Haltenase (NAS) umfasst ist, sowie ein der Haltenase (NAS) gegenüberliegender Rücken (RUE) der Basis (BA1) des ersten Verschlussteils (VE1) von dem anderen Steg (ST2) abgestützt ist, und die Verschlussteile (VE1, VE2) in montiertem Zustand durch über das an den beiden Verschlussteilen (VE1, VE2) angreifende Laufnetz (LAU) eingeleitete Zugkräfte in der Schließposition (SPO) gehalten sind.

2. Gleitschutzkette nach Anspruch 1, **dadurch gekennzeichnet, dass** zumindest einer der Stege (ST1, ST2) eine Abwinkelung (ABW) zur plattenförmigen Basis (BA2) des zweiten Verschlussteils (VE2) aufweist.

3. Gleitschutzkette nach Anspruch 1 oder 2, **dadurch gekennzeichnet, dass** die beiden Verschlussteile (VE1, VE2) an ihren einander abgewandten Endbereichen (EN1, EN2) mit je einem Kettenstrang (KE1, KE2) des Laufnetzes (LAU) verbunden sind.

4. Gleitschutzkette nach Anspruch 3, **dadurch gekennzeichnet, dass** die beiden Kettenstränge (KE1, KE2) in montiertem Zustand im Bereich der inneren Seitenflanken (FLA) anliegen und in Richtung der Lauffläche des Reifens (REI) von einer normal zur Seitenflanke (FLA) verlaufenden Mittelebene (L) der beiden Verschlussteile (VE1, VE2) fortweisen.

5. Gleitschutzkette nach einem der Ansprüche 1 bis 4, **dadurch gekennzeichnet, dass** der erste Verschlussteil (VE1) in einem von dem Rücken (RUE) in die Haltenase (NAS) übergehenden Bereich (BER) der Basis (BA1) einen Krümmungsradius (R) aufweist der größer als der Normalabstand zwischen den beiden Stegen (ST1, ST2) des zweiten Verschlussteils (VE2) ist.

6. Gleitschutzkette nach einem der Ansprüche 3 bis 5, **dadurch gekennzeichnet, dass** die einander abgewandten Endbereiche (EN1, EN2) der Verschlussteile (VE1, VE2) von der jeweiligen Basis (BA1, BA2) weggebogen sind und je zumindest eine Bohrung (BOR) zur Aufnahme eines mit dem jeweiligen Kettenstrang (KE1, KE2) verbundenen Verbindungselements (VER) aufweisen.

7. Gleitschutzkette nach einem der Ansprüche 1 bis 6, **dadurch gekennzeichnet, dass** die Verschlussteile (VE1, VE2) um die Längsachse (λ) der Haltevorrichtung (HAL) drehbar gelagert sind.

8. Gleitschutzkette nach einem der Ansprüche 1 bis 7, **dadurch gekennzeichnet, dass** an jedem Verschlussteil (VE1, VE2) ein einem Endabschnitt (EA1) der Haltevorrichtung zugeordneter Endbereich (EN1') um den jeweiligen Endabschnitt (EA1) der Haltevorrichtung (HAL) gebogen ist.

9. Gleitschutzkette nach einem der Ansprüche 1 bis 8, **dadurch gekennzeichnet, dass** jedes der Verschlussteile (VE1, VE2) einstückig gefertigt ist.

10. Gleitschutzkette nach einem der Ansprüche 1 bis 9, **dadurch gekennzeichnet, dass** das erste Verschlusselement (VE1) einen Anschlag (ANS) für das zweite Verschlusselement (VE2) aufweist, welcher die Bewegung entlang der Längserstreckung der beiden Verschlusselemente (VE1, VE2) in die Schließposition (SPO) begrenzt.

## Claims

1. A non skid chain having a continuous chain mesh (LAU) and a retaining device (HAL) which is connected thereto and which, in the mounted state, is closed to form substantially a ring bearing against an inner cheek (FLA) of a tire, a locking element (VE1, VE2) being disposed at each end of said retaining device (HAL) whilst the two locking elements (VE1, VE2) are interlockable, and the continuous chain mesh (LAU) is tensioned on the outer side of the tire by at least one tensioning/retaining device and the two locking elements (VE1, VE2) exhibit a plate-like base (BA1, BA2) and are capable of being moved substantially along a plane (E) parallel to the two plate-like bases (BA1, BA2) into a locked position (SPO), in which they are releasably interlocked, and the base (BA1) of a first of the two locking elements (VE1) has a catch (NAS), **characterized in that** there are provided opposing fins (ST1 ST2) projecting from the base (BA2) of said second locking element (VE2), for the purpose of guiding said base (BA1) of said first locking element (VE1) into the locked position (SPO), and one of the fins (ST1) is gripped in the locked position (SPO) at least in part by said catch (NAS), and also a back portion (RUE) of the base (BA1) of said first locking element (VE1) located opposite said catch (NAS) is braced by the other fin (ST2), and the locking elements (VE1, VE2) are kept in said locked position (SPO), in the mounted state, by the tension forces introduced via said continuous chain mesh (LAU) engaging the two locking elements (VE1, VE2).

2. A non skid chain as defmed in claim 1, **characterized in that** at least one of said fins (ST1, ST2) has a flange (ABW) directed toward the plate-like base (BA2) of said second locking element (VE2).

3. A non skid chain as defined in claim 1 or claim 2, **characterized in that** the two locking elements (VE1, VE2) are connected at their ends (EN1, EN2) that are remote from each other to a section of chain (KE1, KE2) of the continuous chain mesh (LAU).

4. A non skid chain as defined in claim 3, **characterized in that** the two sections of chain (KE1, KE2) rest, in the mounted state, in the region of said inner cheeks (FLA) and point in the direction of the tread of said tire (REI) away from a central plane (L) of the two locking elements (VE1, VE2) extending normal to said cheek (FLA).

5. A non skid chain as defined in any one of claims 1 to 4, **characterized in that** said first locking element (VE1) has, in a region (BER) extending from said back portion (RUE) to said catch (NAS) of said base (BA1), a radius of curvature (R) which is greater than the perpendicular distance between the two fins (ST1, ST2) of said second locking element (VE2).

6. A non skid chain as defined in any one of claims 3 to 5, **characterized in that** said two opposing end regions (EN1, EN2) of said locking elements (VE1, VE2) are bent away from each base (BA1, BA2) and each has at least one bore (BOR) for the accommodation of a connector (VER) attached to the respective section of chain (KE1, KE2).

7. A non skid chain as defined in any one of claims 1 to 6, **characterized in that** said locking elements (VE1, VE2) are mounted for rotation about the longitudinal axis 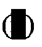 of said retaining device (HAL).

8. A non skid chain as defined in any one of claims 1 to 7, **characterized in that** on each locking element (VE1, VE2) an end region (EN1') assigned to an end section (EA1) of said retaining device is bent around the respective end section (EA1) of said retaining device (HAL).

9. A non skid chain as defined in any one of claims 1 to 8, **characterized in that** each of said locking elements (VE1, VE2) is manufactured as a single unit.

10. A non skid chain as defined in any one of claims 1 to 9, **characterized in that** said first locking element (VE1) has a stop (ANS) for said second locking element (VE2), which limits the movement along the longitudinal extent of the two locking elements (VE1, VE2) toward the locked position (SPO).

## Revendications

1. Chaîne antidérapante avec un réseau de roulement (LAU) et un dispositif de retenue (HAL) relié à ce dernier, lequel dispositif est, lorsqu'il est monté, fermé formant essentiellement un anneau se trouvant sur le flanc latéral (FLA) interne d'un pneu, un élément de fermeture (VE1, VE2) étant disposé respectivement au niveau de chacune des deux extrémités du dispositif de retenue (HAL), les deux éléments de fermeture (VE1, VE2) pouvant être reliés l'un à l'autre, et le réseau de roulement (LAU) situé sur le côté externe du pneu étant tendu par au moins un dispositif de réglage de tension/de retenue, les deux éléments de fermeture (VE1, VE2) présentant chacun une base en forme de plaque (BA1, BA2) et pouvant être déplacés essentiellement le long d'un plan (E) parallèle aux deux bases en forme de plaque (BA1, BA2) dans une position de fermeture (SPO), dans laquelle ils s'encliquètent l'un dans l'autre de manière amovible, la base (BA1) d'un premier des deux éléments de fermeture (VE1) présentant un crochet de fixation (NAS), **caractérisée en ce que** des traverses (ST1, ST2) se faisant face et s'étendant à partir de la base (BA2) du deuxième élément de fermeture (VE2) sont prévus pour amener la base (BA1) du premier élément de fermeture (VE1) en position de fermeture (SPO), l'une des traverses (ST1) étant entourée, en position de fermeture (SPO), au moins par section par le crochet de fixation (NAS), de même qu'une partie dorsale (RUE) de la base (BA1) du premier élément de fermeture (VE1) faisant face au crochet de fixation (NAS) étant soutenue par l'autre traverse (ST2), et les éléments de fermeture (VE1, VE2) étant maintenus à l'état monté en position de fermeture (SPO) par des forces de traction induites par le biais du réseau de roulement (LAU) qui s'engrène au niveau des deux éléments de fermeture (VE1, VE2).

2. Chaîne antidérapante selon la revendication 1, **caractérisée en ce qu'**au moins une des traverses (ST1, ST2) présente une pliure (ABW) par rapport à la base (BA2) en forme de plaque du deuxième élément de fermeture (VE2).

3. Chaîne antidérapante selon la revendication 1 ou 2, **caractérisée en ce que** les deux éléments de fermeture (VE1, VE2) sont reliés respectivement à un maillon de chaîne (KE1, KE2) du réseau de roulement (LAU) au niveau de leurs zones d'extrémité (EN1, EN2) opposées l'une à l'autre.

4. Chaîne antidérapante selon la revendication 3, **caractérisée en ce que** les deux maillons de chaîne (KE1, KE2) se situent, à l'état monté, dans la zone des flancs latéraux internes (FLA) et se poursuivent dans le sens de la surface de roulement du pneu (REI) depuis un plan médian (L) des deux éléments de fermeture (VE1, VE2) perpendiculaire au flanc latéral (FLA).

5. Chaîne antidérapante selon l'une quelconque des revendication 1 à 4, **caractérisée en ce que** le premier élément de fermeture (VE1) présente un rayon de courbure (R) dans une zone (BER) de la base (BA1) partant de la partie dorsale (RUE) jusqu'au crochet de fixation (NAS), lequel rayon est supérieur à la distance normale entre les deux traverses (ST1, ST2) du deuxième élément de fermeture (VE2).

6. Chaîne antidérapante selon l'une quelconque des revendications 3 à 5, **caractérisée en ce que** les zones d'extrémités (EN1, EN2) des éléments de fermeture (VE1, VE2) opposées l'une à l'autre sont courbées à partir de leur base respective (BA1, BA2), et **en ce qu'**elles présentent chacune au moins un alésage (BOR) destiné à recevoir un élément de raccord (VER) relié au maillon de chaîne (KE1, KE2) respectif.

7. Chaîne antidérapante selon l'une quelconque des revendications 1 à 6, **caractérisée en ce que** les éléments de fermeture (VE1, VE2) sont logés de manière à pouvoir pivoter autour de l'axe longitudinal (λ) du dispositif de retenue (HAL).

8. Chaîne antidérapante selon l'une quelconque des revendications 1 à 7, **caractérisée en ce qu'**au niveau de chaque élément de fermeture (VE1, VE2), une zone d'extrémité (EN1') associée à une section d'extrémité (EA1) du dispositif de retenue est courbée autour de la section d'extrémité (EA1) respective du dispositif de retenue (HAL).

9. Chaîne antidérapante selon l'une quelconque des revendications 1 à 8, **caractérisée en ce que** chacun des éléments de fermeture (VE1, VE2) est réalisé d'un seul tenant.

10. Chaîne antidérapante selon l'une quelconque des revendications 1 à 9, **caractérisée en ce que** le premier élément de fermeture (VE1) présente une butée (ANS) pour le deuxième élément de fermeture (VE2), laquelle limite le mouvement le long de l'avancée longitudinale des deux éléments de fermeture (VE1, VE2) dans la position de fermeture (SPO).
